(19) Europäisches Patentamt
European Patent Office
Office européen des brevets

(11) EP 0 989 298 B1

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.$^7$: **F02M 61/16**, B23H 9/16

(21) Anmeldenummer: **99104976.8**

(22) Anmeldetag: **12.03.1999**

(54) **Kraftstoffeinspritzventil für eine Brennkraftmaschine**

Fuel injector for an internal combustion engine

Injecteur de combustible pour un moteur à combustion interne

(84) Benannte Vertragsstaaten:
**DE FR GB IT**

(30) Priorität: **24.09.1998 DE 19843953**

(43) Veröffentlichungstag der Anmeldung:
**29.03.2000 Patentblatt 2000/13**

(73) Patentinhaber: **SIEMENS AKTIENGESELLSCHAFT**
**80333 München (DE)**

(72) Erfinder:
• **Yalcin, Hakan**
93059 Regensburg (DE)
• **Frank, Wilhelm**
96049 Bamberg (DE)
• **Voigt, Andreas, Dr.**
93055 Regensburg (DE)

(56) Entgegenhaltungen:
EP-A- 0 363 142      EP-A- 0 425 236
EP-A- 0 449 662      DE-A- 19 618 650

• **"Extended trials with PC4 at 1213kW/cylinder (1650bhp/cylinder)" SHIPBUILDING AND MARINE ENGINEERING INTERNATIONAL., Bd. 99, Nr. 1200, 1. Juli 1976 (1976-07-01), Seite 373 XP002114105 WHITEHALL PRESS LTD. MAIDSTONE., GB**

**Beschreibung**

Die Erfindung betrifft ein Kraftstoffeinspritzventil mit einem Düsenkörper gemäß dem Oberbegriff der Patentansprüche 7 und 18 und ein Verfahren zum Herstellen eines Kraftstoffeinspritzventils mit einem Düsenkörper.

Bei Einspritzanlagen, insbesondere bei Common-Rail-Einspritzanlage, wird Kraftstoff über ein Kraftstoffeinspritzventil in den Brennraum einer Brennkraftmaschine eingespritzt.

Aus EP 0 425 236 A1 ist ein Kraftstoffeinspritzventil bekannt, das einen Düsenkörper mit einer rotationssymmetrischen Druckkammer mit geringem Durchmesser aufweist, in die eine zentrale Führungsbohrung und ein über eine seitlich in die Druckkammer eingebrachte Nische ein Zulaufkanal mündet. Eine Düsennadel wird in der Führungsbohrung geführt und öffnet durch seine axiale Bewegung das Ventil, das von dem an der Düsenspitze des Düsenkörpers eingebrachten Ventilsitz und der Düsennadel gebildet wird. Die zwischen der Führungsbohrung und dem Zulaufkanal liegende Zwischenwand weist im Bereich der Druckkammer ihre geringste Wandstärke auf. Dort treten bei hohem Kraftstoffdruck Materialspannungen auf, die zur Zerstörung des Düsenkörpers und des Kraftstoffeinspritzventils führen können. Durch Elysieren wird in die rotationssymmetrische Druckkammer die Nische eingebracht, in die der Zulaufkanal mündet, wodurch die Wandstärke der Zwischenwand groß ausgelegt werden kann, um so eine hohe Druckfestigkeit zu erhalten. Durch Einbringen einer Elysierelektrode in die Führungsbohrung werden Kanten abgerundet oder die Form der Nische beeinflußt.

Ein Verfahren gemäß Oberbegriff von Anspruch 1 ist aus der EP-A-0 363 142 bekannt.

Die Aufgabe der Erfindung besteht darin, ein Kraftstoffeinspritzventil mit hoher Druckfestigkeit bereitzustellen und kostengünstig herzustellen.

Die Aufgabe der Erfindung wird durch die Merkmale der unabhängigen Patentansprüche gelöst.

Vorteilhafte Ausformungen der Erfindung sind in den abhängigen Patentansprüchen angegeben.

In der Erfindung wird in den Düsenkörper des Kraftstoffeinspritzventils eine zentrale Führungsbohrung, ein Zulaufkanal und eine Druckkammer so eingebracht, daß die Führungsbohrung und der Zulaufkanal in die Druckkammer münden und zwischen dem Zulaufkanal und der Druckkammer Verschneidungsbereiche mit scharfen, kantigen Übergängen entstehen. Eine Elysierelektrode, die z.B. als hohlzylindrische Kanüle ausgebildet sein kann, wird in den Zulaufkanal eingeführt. Durch die Zulaufbohrung bzw. die die Kanülenbohrung der Kanüle wird eine Elysierflüssigkeit gepumpt, die über die Druckkammer und die Führungsbohrung abfließt. Mit der definierten Führung der Elysierflüssigkeit (Elektrolyt) wird der Materialabtrag durchgeführt, bei dem die zwischen dem Zulaufkanal und der Druckkammer liegenden Verschneidungsbereiche entfernt werden und die Kanten der Verschneidungsbereiche abgerundet werden.

Auf die Außenfläche der Erodierkanüle ist eine elektrisch isolierende Ummantelung aufgebracht, z.B. in Form einer Beschichtung. Die Spitze der Elysierelektrode bzw, der Kanüle ist vorzugsweise abgeschrägt, wobei die abgeschrägte Stirnfläche der Elysierelektrode in Richtung der Druckkammer öffnet.

Vor der Durchführung des oben beschriebenen Verfahrens wird der Durchbruch zwischen dem Zulaufkanal und der Druckkammer hergestellt, indem die Führungsbohrung und der Zulaufkanal, der als Blindbohrung ausgeführt wird, in den Düsenkörper eingebracht wird und der Durchmesser der Druckkammer durch Elysieren der Führungsbohrung erweitert wird, bis ein Durchbruch zwischen der Druckkammer und dem Zulaufkanal entsteht. Da nur so lange elysiert wird, bis der Durchbruch entsteht, ist die Druckkammer schnell und kostengünstig herstellbar.

Die Zwischenwandendfläche ist die Fläche der Zwischenwand, die von der Wand des Zulaufkanals bis zur Wand der Führungsbohrung verläuft. Bei optimaler Ausführung des Elysierverfahrens zum Abtragen der Verschneidungsbereiche wird die Zwischenwand plan und annähernd senkrecht zur Führungsbohrung ausgebildet, wobei die Kante zwischen der Wand des Zulaufkanals und der Wand der Druckkammer abgerundet wird, so daß sich vorteilhaft eine entsprechend hoher Druckfestigkeit des Düsenkörpers ergibt.

Bevorzugte Ausführungsbeispiele der Erfindung werden anhand der Beschreibung der Figuren näher erläutert.

Figur 1:   Einen Längsschnitt durch den Düsenkörper und die Düsennadel eines Kraftstoffeinspritzventils,

Figur 1a:   Einen vergrößertem Ausschnitt des Düsenkörpers und der Düsennadel im Bereich der Druckkammer aus Figur 1,

Figur 2:   Eine als Kanüle ausgebildete Elysierelektrode, durch die eine Elysierflüssigkeit (Elektrolyt) zum Abtragen von Verschneidungsbereichen im Düsenkörper gepumpt wird.

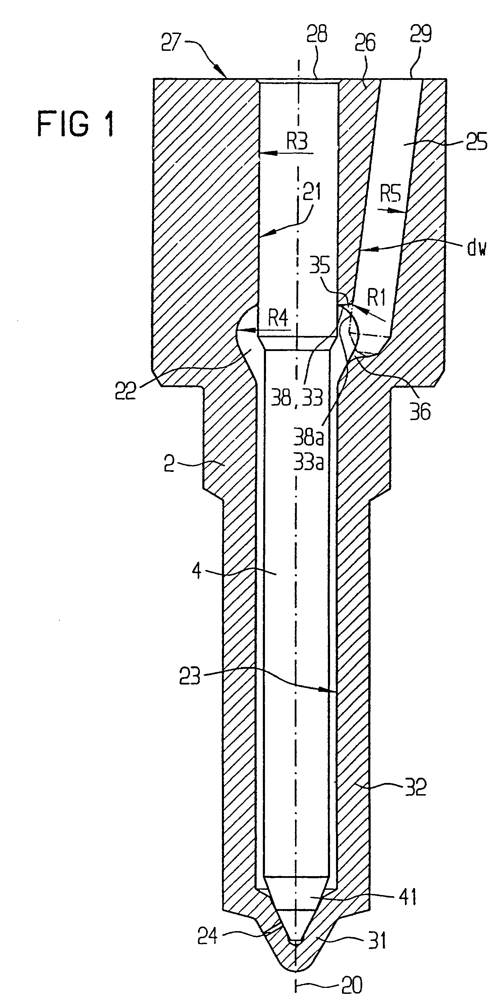

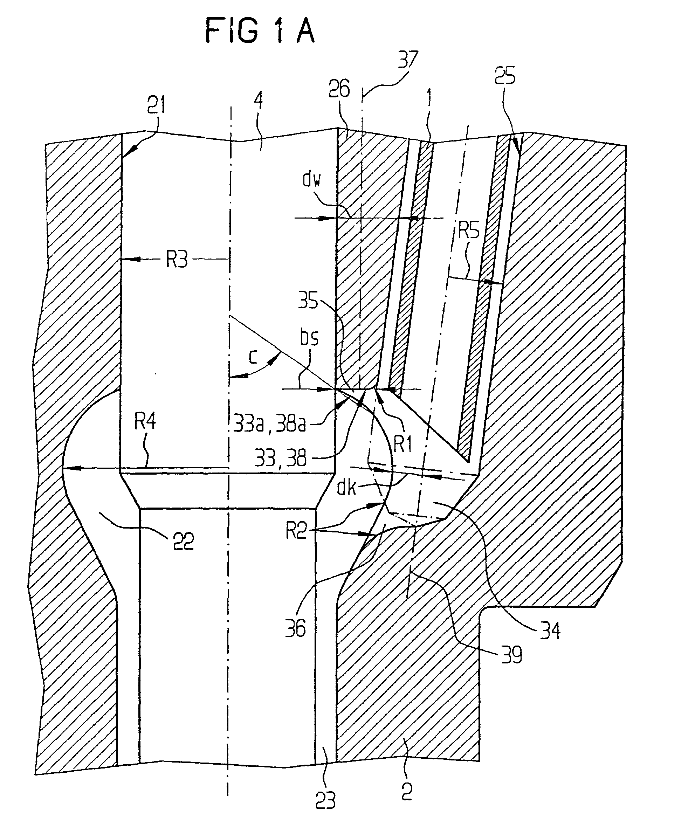

Figur 1 zeigt einen Längsschnitt durch den Düsenkörper 2 und der Düsennadel 4 eines Kraftstoffeinspritzventils, die im wesentlichen rotationssymmetrisch ausgeführt sind. Die Düsennadel 4 wird axial in der zentralen Führungsbohrung 21 des Düsenkörpers 2 geführt. Über einen Absatz geht die Führungsbohrung 21 eine Druckkammer 22 über, die sich glockenförmig radial bis auf einen maximalen Radius R4 erweitert und sich dann annähernd gleichförmig verjüngt und in eine Schaftbohrung 23 übergeht, die einen kleineren Radius als die Führungbohrung 21 aufweist.

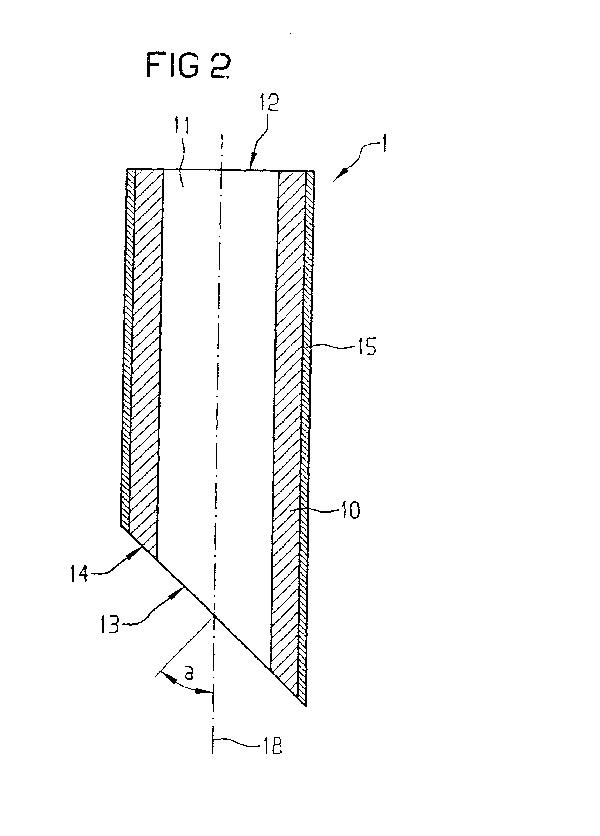

Figur 1a zeigt eine Vergrößerung des Düsenkörpers 2 und der Düsennadel 4 im Bereich der Druckkammer 22 aus Figur 1, wobei eine in Figur 2 näher beschriebene, als Kanüle 10 ausgeführte Elysierelektrode 1 in den Zulaufkanal 25 eingebracht ist.

Anhand der Figuren 1 und 1a werden die Ausführungsformen und Ausführungsbeispiele erläutert.

Der maximalen Radius R4 der Druckkammer 22 wird im folgenden als Kammerradius R4 bezeichnet, der Radius der Führungsbohrung 21 als Führungsradius R3, der Radius des Zulaufkanals 25 als Zulaufradius R5 und die Achse des Zulaufkanals 25 als Zulaufachse 39 bezeichnet.

An die Schaftbohrung 23 schließt ein konisch in der Düsenspitze 31 des Düsenkörpers 2 zusammenlaufender Ventilsitz an. Der Ventilsitz bildet zusammen mit der Nadelspitze 41 der Düsennadel 4 ein Einspritzventil, das durch eine axial von der Düsenspitze 31 weggerichtete Bewegung öffnet. Der Kraftstoff fließt von einem Zulaufkanal 25, der seitlich zur Führungsbohrung 21 angeordnet ist und in die Druckkammer 22 mündet, über die Druckkammer 22, die Schaftbohrung 23 über das geöffnete Einspritzventil 41,31 und über die in die Düsenspitze 31 eingebrachten Einspritzlöcher 24 in den Brennraum einer Brennkraftmaschine.

Die Düsennadel 4 weist in Höhe der Druckkammer 22 einen konischen Absatz auf, der vom Kraftstoffdruck beaufschlagt wird wodurch eine axiale, der Nadelspitze 41 entgegengesetzte gerichtete Kraft auf die Düsennadel 4 ausgeübt wird.

Das der Düsenspitze 31 axial entgegengesetzte Ende des Düsenkörpers 2 bildet eine vorzugsweise plan ausgebildete Stirnfläche 27, die von der Bohrungsöffnung 28 der Führungsbohrung 28 und der Zulauföffnung 29 des Zulaufkanals 25 durchbrochen wird. Der Zulaufkanal 25 und die Führungsbohrung 21 schließen eine Zwischenwand 26 mit einer Zwischenwandendfläche 38, 38a ein, die von der Wand der Führungsbohrung 21 bis zur Wand des Zulaufkanals 25 reicht und zur Druckkammer 22 weist. Die Dikke der Zwischenwand 26 wird im folgenden als Wanddicke dw bezeichnet und verringert sich axial in Richtung der Druckkammer 22.

Die Zwischenwandendfläche 38,38a wird im Längsschnitt der Figuren 1 und 1a als Steg 33,33a mit einer Stegbreite bs, bsa bezeichnet, die weiter unten definiert wird.

Die im folgenden beschriebenen Ausführungsformen mit den Bezugszeichen 33a,38a,bsa und 33,38,bs der Zwischenwandendfläche, des Stegs und der Stegbreite zeigen beispielhaft den Düsenkörper 2 vor und nach dem Abtragen der Verschneidungsbereiche 35,36, wobei die Bezugszeichen der unten beschriebenen Radien R1 und R2 in allen Ausführungsformen ein einheitliches Bezugszeichen erhalten.

Die in Figur 1 und 1a gestrichelt dargestellte Mantellinie des Zulaufkanals 25 schneidet die Wand der Druckkammer 22 und bilden einen ersten Verschneidungsbereich 35 mit der Zwischenwandendfläche 38a, dem Steg 33a mit der Stegbreite bsa und einen zweiten Verschneidungsbereich 36, die beim Einbringen der Druckkammer 22 und des Zulaufkanals 25 in den Düsenkörper entstehen.

Der Zulaufkanal 25 schneidet die Druckkammer 22 so, daß der minimale Abstand zwischen der Zulaufachse 39 und der Wand der Druckkammer 22, im folgenden Kammerabstand dk genannt, größer als 0 mm ist. Vorzugsweise beträgt der Kammerabstand dk wenig mehr als 0 mm, um vorteilhaft den Steg 33,33a mit einer großen Stegbreite bs, bsa auszubilden und trotzdem einen für das Abtragen des Stegs 33,33a durch Elysieren vorteilhaften Durchbruch zwischen der Druckkammer 22 und dem Zulaufkanal 25 zu fertigen. So kann die Elysierflüssigkeit durch den Zulaufkanal 25, den Durchbruch und die Führungsbohrung 21 fließen. Werden vorteilhaft Fertigungstoleranzen beim Einbringen der Druckkammer 22 und des Zulaufkanals 25 in den Düsenkörper 2 berücksichtigt, ergibt sich ein vorteilhaftes Verhältnis des Kammerabstands dk zum Zulaufradius R5, das im Bereich zwischen 0,5 und 1 liegt, ist, was mit der Beziehung

$$0{,}5 < dk/R5 < 1$$

ausgedrückt wird.

Der Winkel, den der Zulaufkanal 25 mit der Längsachse 20 des Düsenkörpers 2 einschließt, liegt vorzugsweise im Bereich zwischen 5° und 15°.

Der erste und der zweite Verschneidungsbereich 35,36 weisen eine erste und eine zweite Verschneidungskante mit kleinen Kantenradien R1,R2 auf und werden durch das weiter unten beschriebene Elysierverfahren vorzugsweise soweit abgetragen, bis die Zwischenwandendfläche 38 entsteht, die von der Wand der Führungsbohrung 21 bis zur Wand des Zulaufkanals 25 eine plane Fläche bildet, deren Normale 37 annähernd parallel zur Längsachse 20 des Düsenkörpers 2 verläuft. Dadurch schließt die Zwischenwandendfläche 38 mit der Wand der Führungsbohrung 21 einen annähernd rechten Winkel und mit der Wand des Zulaufkanals 25 einen Winkel ein, der größer als 90 Grad ist.

Die Linie mit der geringsten Länge, die entlang des Stegs (33) von der Wand der Führungsbohrung (21) bis zur Wand des Zulaufkanals (25) verläuft, bildet mit der Kante, die von der Wand der Führungsbohrung 21 und der Zwischenendfläche 38,38a und der ersten Verschneidungskante zwei Schnittpunkte, durch die eine Gerade gelegt wird, die mit der Längsachse (20) des Düsenkörpers 2 einen Winkel einschließt, der im folgenden Elysierwinkel c genannt wird. Die Stegbreite bs, bsa ist als Abstand der zwei Schnittpunkte definiert.

Der Elysierwinkel c ist abhängig von der Größe des nach dem Elysieren verbleibenden ersten Verschneidungsbereichs 35 und ist vorzugsweise größer 70 Grad.

In einer bevorzugten Ausführungsform steht die Differenz R4-R3 zwischen dem Kammerradius R4 und dem Führungsradius R3 in folgendem Verhältnis zur Stegbreite bs,bsa:

$$0{,}7 < \text{Differenz R4-R3} / \text{Stegbreite bs,bsa} < 1{,}3$$

Ist das Verhältnis von der Differenz zwischen dem Kammerradius R4 und dem Führungsradius R3 zur Stegbreite bs,bsa annähernd 1, wie in folgender Beziehung dargestellt,

$$\text{Differenz R4-R3} / \text{Stegbreite bs,bsa} =\sim 1,$$

so liegt ein besonders bevorzugte Ausführungsform vor, da der Durchbruch zwischen der Druckkammer 22 und dem Zulaufkanal 25 groß genug ausgeführt ist, um Fertigungstoleranzen zu berücksichtigen und der Düsenkörper 2 einen kleinen Kammerradius R4 und einen annähernd planen, senkrecht zur Längsachse 20 verlaufenden Steg aufweist, wodurch vorteilhaft eine hohe Druckfestigkeit durch die plane Fläche bei gleichzeitig geringen Kosten durch die geringe Elysierzeit der Druckkammer 22 erzielt wird.

Die Stegbreite bs,bsa ist vorzugsweise größer als 0,65 mm, um eine hohe Druckfestigkeit zu erzielen.

Weiterhin wird durch das Elysierverfahren mit der Elysierelektrode 1 im Zulaufkanal 25 die Kante zwischen der Zwischenwandendfläche 38 und der Wand des Zulaufkanals 25 auf einen ersten Verschneidungsradius R1a abgerundet. Bei einem ersten Verschneidungsradius R1a, der größer als 0,3 mm ist, ist eine hohe Druckfestigkeit des Düsenkörpers 2 erzielbar. Wird eine kurze Elysierzeit angestrebt, wird bei einem ersten Verschneidungsradius R1a erzielt, der größer als 0,3 mm ist ein guter Kompromiß zwischen Elysierzeit und Druckfestigkeit. Werden Fertigungstoleranzen mit berücksichtigt, liegt der bevorzugte Bereich des ersten Verschneidungsradius R1 zwischen 0,3 mm und 0,6 mm.

Weiterhin wird durch das Elysierverfahren die zweite Verschneidungskante auf einen zweiten Verschneidungsradius R2 abgerundet, der vorzugsweise größer als 0,3 mm ist.

Die Stegbreite bs,bsa ist abhängig von dem Kammerradius R4, dem Führungsradius R3 und dem Zulaufradius R5.

Figur 2 zeigt eine Elysierelektrode 1 in Form einer Kanüle, mit der elektrolytisch der erste und die zweite Verschneidungsbereich 35, 36 aus dem Material des Düsenkörpers 2 abgetragen werden.

Die Elysierelektrode 1 ist vorzugsweise hohlzylindrisch ausgebildet, wobei auf die Außenfläche des Kanülenkörpers eine elektrisch isolierende Ummantelung aufgebracht ist, z.B. in Form einer Beschichtung 14.

Die Normale der Elektrodenstirnfläche 14 schließt mit der Kanülenlängsachse 18 einen Öffnungswinkel a ein, der größer als 0° ist. Da auf die Außenfläche der Elysierelektrode 1 bzw. der hohlzylindrischen Kanüle 10 eine elektrisch isolierende Beschichtung 14 aufgebracht ist, wird durch das Elysieren kein Material im Zulaufkanal 25 abgetragen.

Die Elysierelektrode kann z.B. als zylinderförmiger, dünne Elektrode ausgebildet sein.

Im folgenden wird ein Verfahren zum Herstellen des Düsenkörpers 2 dargestellt:

Die Führungsbohrung 21 und der Zulaufkanal 25 wird durch Bohren in den Düsenkörper 2 eingebracht, wobei der Zulaufkanal 25 als Blindbohrung ausgeführt ist und die beiden Bohrungen 21,25 sich nicht schneiden. In der Führungsbohrung wird durch Elysieren die Druckkammer 22 eingebracht und vorzugsweise rotationssymmetrisch ausgeformt, wobei das Elysieren vorzugsweise gerade solange durchgeführt wird, bis ein Durchbruch zwischen der Druckkammer 22 und dem Zulaufkanal 25 erzielt wird, um so vorteilhaft geringe Fertigungszeiten zu erzielen.

Daraufhin wird die Erodierelektrode 1 so in den Zulaufkanal 25 eingeführt, daß die schräge Elektrodenstirnfläche 14 mit der unteren Elektrodenöffnung 13 in Richtung Druckkammer 22 weist. Eine Elysierflüssigkeit wird durch den Zulaufkanal 25 bzw. durch die obere Elektrodenöffnung 12 in die Kanülenbohrung 11 gepumpt, tritt an der schrägen, unteren Elektrodenöffnung 13 aus, fließt durch den Durchbruch zwischen der Druckkammer 22 und dem Zulaufkanal 25, über die Druckkammer 22 und die Führungsbohrung 21 ab.

Durch Anlegen einer Elysierspannung zwischen der Elysierelektrode 1 bzw. der Kanüle 10 und dem Düsenkörper 2 fließt ein Strom von der Stirnfläche 14 durch die Elysierflüssigkeit (Elektrolyt) zum Düsenkörper 2, wodurch der erste und der zweite Verschneidungsbereich 35,36 in den Düsenkörper 2 abgetragen werden, wobei der Grad des Abtragens der Verschneidungsbereiche 35,36 von der Erodierzeit abhängig. Vorzugsweise wird so lange elysiert, bis die in den vorhergehenden Figuren beschriebene, bevorzugte Ausführungsform des Düsenkörpers 2 mit der planen Zwischenwandendfläche 38 ausgeformt ist. Es kann aber auch vor Erreichen des bevorzugten Ausführungsform das Elysieren beendet werden, wodurch vorteilhaft Elysierzeit eingespart und Kosten gesenkt werden.

Die Geschwindigkeit und die Form der Verschneidungsbereiche 35,36 nach dem Elysieren hängt ab vom Öffnungswinkels a, der Position der Elysierelektrode 1 im Zulaufkanal 25 und der Dauer des Elysierens ab. Der Öffnungswinkel liegt vorzugsweise im Bereich zwischen 30 und 60 Grad.

Als Elysierverfahren wird vorzugsweise das elektrochemische Abtragen mit dem ECM eingesetzt. Das vom Düsenkörpers 2 abgetragene Material wird mit der Elysierflüssigkeit durch die Führungsbohrung 21 ausgespült.

Bei diesem Elysierverfahren wird durch das Einführen der Elektrode 1 durch den dünnen Zulaufkanal 25 und durch die schräge Stirnfläche 14 besonders vorteilhaft im wesentlichen nur im Bereich der Verschneidungsbereiche 35,36 gezielt Material abgetragen.

Durch die Fertigungsschritte,

- Einbringen der Führungsbohrung 21 und des Zulaufkanals 25 in den Düsenkörper 2,
- Elysieren der Druckkammer 22,
- und Abtragen der Verschneidungsbereiche 35, 36

wird ein einfaches und kostengünstiges Herstellungsverfahren für einen hochdruckfesten Düsenkörper für einen Kraftstoffdruck von bis über 2000 bar bereitgestellt.

Die Hochdruckfestigkeit des Düsenkörpers 2 hängt ab von dem maximalen Durchmesser der Druckkammer 22, der Stegbreite bs,bsa, der Form der Zwischenwandendfläche 38,38a und des Stegs 33,33a, den Radien R1 bis R5, der Form der Verschneidungsbereiche 35,36, dem Verhältnis der Differenz R4-R3 zur Stegbreite bs,bsa, dem Verhältnis des Kammerabstands dk zum Zulaufradius R5 und dem Elysierwinkel c.

Eine besonders hohe Druckfestigkeit im Bereich von mehr als 2000 bar und geringe Fertigungskosten resultiert bei folgender Ausführungsform des Düsenkörpers 2:

- der Zulaufkanal 25 ist zumindest in seinem zur Druckkammer 22 weisenden Abschnitt gerade ausgeführt, z.B. als Bohrung,
- Die Zwischenwandendfläche 38a ist plan ausgeführt.
- der Winkel zwischen der Zwischenwandendfläche 38a und der Wandung der Führungsbohrung 21 liegt bei etwa 90°.
- der erste Verschneidungsradius R1a ist > 0,3 mm und bevorzugt kleiner als 0,6 mm,
- die Stegbreite bsa ist liegt zwischen 7,5 und 8,5 mm, bevorzugt bei 8mm,
- der Winkel zwischen der Wandung der Zulaufbohrung und der planen Zwischenwandendfläche 38a liegt zwischen 96° und 98°, bevorzugt bei etwa 97°.

Die Kombinationen aus den erwähnten Merkmalen gewähren eine hohe Druckfestigkeit, die sich auch bei Erhöhen der Stegbreite bsa auf über 8,5 mm nur noch unterproportional erhöht, was ein überraschendes Ergebnis darstellt.

**Patentansprüche**

1. Verfahren zum Herstellen eines Kraftstoffeinspritzventils mit einem Düsenkörper (2),

   - der eine Druckkammer (22) aufweist, in die eine Führungsbohrung (21) und ein Zulaufkanal (25) münden, zwischen denen eine Zwischenwand (26) verläuft, wobei
   - beim Einbringen der Druckkammer (22) und des Zulaufkanals (25) in den Düsenkörper (2) zwischen der Druckkammer (22) und dem Zulaufkanal (25) ein erster Verschneidungsbereich (35) des Düsenkörpers (2) entsteht, der durch Elysieren zumindest teilweise abgetragen wird, indem

     - eine Elysierelektrode (1) in einen Zulaufkanal (25) eingeführt wird, und
     - eine Elektrolyseflüssigkeit durch den Zulaufkanal (25) gepumpt wird und durch die Druckkammer (22) und die Führungbohrung (21) abfließt, wobei

   - die Elysierelektrode (1) als hohlzylindrische Kanüle (10) ausgebildet ist,
   - auf die Außenfläche der Kanüle (10) eine elektrisch isolierende Ummantelung (15) aufgebracht ist, insbesondere in Form einer Beschichtung, **dadurch gekennzeichnet, daß**
   - die Normale der Stirnfläche (14) der Kanüle (10) mit der Kanülenlängsachse (18) einen Öffnungswinkel (a) einschließt, der größer als 0 Grad ist.

2. Kraftstoffeinspritzventil, hergestellt nach einem Verfahren gemäß Anspruch 1, mit einem Düsenkörper (2), der eine Druckkammer (22) aufweist, in die eine Führungsbohrung (21) und ein Zulaufkanal (25) mündet, zwischen denen eine Zwischenwand (26) verläuft, deren Zwischenwandendfläche (38, 38a) zur Druckkammer (22) weist, wobei

- der Zulaufkanal (25) die Druckkammer (22) so schneidet, daß der Kammerabstand (dk), der dem minimalen Abstand zwischen der Achse (39) des Zulaufkanals (25) und der Wand der Druckkammer (22) entspricht, größer als 0 mm ist, und
- die Wand des Zulaufkanals (25) mit der Zwischenwandendfläche (38,38a) eine abgerundete, erste Verschneidungskante mit einem ersten Verschneidungsradius (R1) bildet, **dadurch gekennzeichnet, daß**

der erste Verschneidungsradius (R1) im Bereich von 0,3 mm bis 0,6 mm liegt und daß
das Verhältnis des Kammerabstands (dk) zum Radius (R5) des Zulaufkanals (25) im Bereich zwischen 0,5 und 1 liegt, 0,5 < Kammerabstand (dk)/Radius des Zulaufkanals (R5) < 1.

3. Kraftstoffeinspritzventil nach Anspruch 2, **dadurch gekennzeichnet, daß**

- die Zwischenwandendfläche (38,38a) zwischen der Wand der Führungsbohrung (21) und der Wand des Zulaufkanals (25) einen Steg (33,33a) mit einer Stegbreite (bs,bsa) bildet,
- die Linie mit der geringsten Länge, die entlang des Stegs (33,33a) von der Wand der Führungsbohrung (21) bis zur Wand des Zulaufkanals (25) verläuft, mit der Kante, die von der Wand des Zulaufkanals (25) und der Zwischenwandendfläche (38,38a) eingeschlossen wird, und der Kante, die von der Wand der Führungsbohrung (21) mit der Zwischenwandendfläche (38,38a) eingeschlossen wird, zwei Schnittpunkte bilden, und
- eine durch die zwei Schnittpunkte verlaufende Gerade mit Längsachse (20) des Düsenkörpers (2) einen Winkel (c) einschließt, der größer 70 Grad ist, wobei der Abstand der zwei Schnittpunkte als Stegbreite (bs, bsa) definiert ist.

4. Kraftstoffeinspritzventil nach Anspruch 2 oder 3, **dadurch gekennzeichnet, daß** die Differenz (R4-R3) zwischen dem maximalen Radius (R4) der Druckkammer (22) und dem Radius (R3) der Führungsbohrung (21) in folgendem Verhältnis zur Stegbreite (bs,bsa) steht:

$$0,7 < \text{Differenz (R4-R3) / Stegbreite (bs,bsa)} < 1,3$$

5. Kraftstoffeinspritzventil nach einem der Ansprüche 2 bis 4, **dadurch gekennzeichnet, daß**

- die Zwischenwandendfläche (38,38a) von der Führungsbohrung (21) ausgehend bis zur Wand des Zulaufkanals (25) als annähernd plane Fläche ausgeformt ist, und
- die Normale (37) der Zwischenwandendfläche (38,38a) annähernd parallel zur Wand der Führungsbohrung (21) ist und mit der Wand des Zulaufkanals (25) einen Winkel einschließt, der größer als 0 Grad ist.

6. Kraftstoffeinspritzventil nach einem der Ansprüche 2 bis 5, **dadurch gekennzeichnet, daß** die Stegbreite (bs,bsa) größer als 0,65 mm ist.

7. Kraftstoffeinspritzventil nach einem der Ansprüche 2 bis 6, **dadurch gekennzeichnet, daß** die Druckkammer (22) annähernd rotationssymmetrisch ausgeformt ist.

8. Kraftstoff einspritzventil nach einem der Ansprüche 2 bis 7, **dadurch gekennzeichnet, daß** die Wand des Zulaufkanals (25) mit der Wand der Spitze (34) des Zulaufkanals (25) eine abgerundete, zweite Verschneidungskante mit einem zweiten Verschneidungsradius (R2) bildet, der größer als 0,3 mm ist.

9. Kraftstoffeinspritzventil nach einem der Ansprüche 2 bis 8, **dadurch gekennzeichnet, daß** der Winkel, den der Zulaufkanal (25) mit der Längsachse (20) des Düsenkörpers (2) einschließt, im Bereich zwischen 5° und 15° liegt.

10. Kraftstoffeinspritzventil, hergestellt nach einem Verfahren gemäß Anspruch 1, mit einem Düsenkörper (2), der eine Druckkammer (22) aufweist, in die eine Führungsbohrung (21) und ein Zulaufkanal (25) mündet, zwischen denen eine Zwischenwand (26) verläuft, deren Zwischenwandendfläche (38,38a) zur Druckkammer (22) weist, wobei

- der Zulaufkanal (25) zumindest in seinem zur Druckkammer (22) weisenden Abschnitt gerade ausgeführt ist, vorzugsweise als Bohrung,

- der Winkel zwischen der Wandung der Zulaufbohrung und der planen Zwischenwandendfläche (38a) zwischen 96° und 98° liegt, bevorzugt bei etwa 97°,
- die Zwischenwandendfläche (38a) plan ausgeführt ist,
- der erste Verschneidungsradius (R1a) ist größer 0,3 mm ist und
- die Stegbreite (bsa) zwischen 7,5 und 8,5 mm, bevorzugt bei 8 mm, liegt.

**11.** Kraftstoffeinspritzventil nach Anspruch 10, **dadurch gekennzeichnet, daß**

- der Zulaufkanal (25) gerade ausgeführt ist, z.B. als Bohrung,
- der Winkel zwischen der Führungsbohrung (21) und dem Zulaufkanal 25 bei etwa 7° liegt und
- der erste Verschneidungsradius (R1a) kleiner als 0,6 mm ist,
- der Winkel zwischen der Zwischenwandendfläche (38a) und der Wandung der Führungsbohrung (21) bei etwa 90° liegt,

**12.** Verfahren nach Anspruch 1, **dadurch gekennzeichnet, daß**

- die Elysierelektrode (1) als zylindrische Elektrode ausgebildet ist,
- auf die Außenfläche der Elektrode eine elektrisch isolierende Ummantelung aufgebracht ist, insbesondere in Form einer Beschichtung, und

die Normale der Stirnfläche der Elektrode mit der Elektrodenlängsachse einen Öffnungswinkel einschließt, der größer als 0 Grad ist.


**Claims**

**1.** Method for manufacturing a fuel injection valve with a nozzle (2)

- which has a pressure chamber (22) into which a guide bore hole (21) and a supply channel (25) lead, between which a partition (26) runs, whereby

- placing the pressure chamber (22) and the supply channel (25) into the nozzle (2) between the pressure chamber (22) and the supply channel (25) gives rise to a first intersection area (35) of the nozzle (2) which is at least partially removed by electrolytic machining, in that

  - an electrolytic electrode (1) is introduced into a supply channel (25), and

  - an electrolytic fluid is pumped through the supply channel (25) and drains off through the pressure chamber (22) and the guide bore hole (21), **characterised in that**

- the electrolytic electrode (1) is in the shape of a cylindrical hollow needle (10),

- there is an electrical insulating casing (15) on the outer surface of the hollow needle (10), in particular, in the form of a coating, and

- the normal of the frontal area (14) of the hollow needle (10) encompasses an aperture angle (a) with the hollow needle longitudinal axis (18) which is greater than 0 degrees.

**2.** Fuel injection valve, manufactured according to a method according to Claim I, with a nozzle (2) which has a pressure chamber (22) into which a guide bore hole (21) and a supply channel (25) lead, between which a partition (26) runs, the partition end face (38, 38a) of which points to the pressure chamber (22), whereby

- the supply channel (25) intersects the pressure chamber (22) such that the chamber spacing (dk), which is equivalent to the minimum spacing between the axis (39) of the supply channel (25) and the wall of the pressure chamber (22), is greater than 0 mm, and

- the wall of the supply channel (25) forms a rounded, first intersection edge with a first intersection radius (R1), **characterised in that**

the first intersection radius (R1) is in the region of 0.3 mm to 0.6 mm and **in that** the ratio of the chamber spacing (dk) to the radius (R5) of the supply channel (25) is in the region of 0.5 and 1 (0.5 < chamber spacing (dk) / radius of the supply channel (R5) < 1).

3. Fuel injection valve according to Claim 2, **characterised in that**

   - the partition end face (38, 38a) between the wall of the guide bore hole (21) and the wall of the supply channel (25) forms a fixed link (33, 33a) with a fixed link width (bs, bsa),

   - the line with the shortest length which runs along the fixed link (33, 33a) from the wall of the guide bore hole (21) to the wall of the supply channel (25) forms two points of intersection with the edge which is encompassed by the wall of the supply channel (25) and the partition end face (38, 38a), and the edge which is encompassed by the wall of the guide bore hole (21) with the partition end face (38, 38a), and

   - a straight line running through the two points of intersection encompasses an angle (c) with longitudinal axis (20) of the nozzle (2) which is greater than 70 degrees, the spacing of the two points of intersection being defined as a fixed link width (bs, bsa).

4. Fuel injection valve according to Claim 2 or 3, **characterised in that** the difference (R4-R3) between the maximum radius (R4) of the pressure chamber (22) and the radius (R3) of the guide bore hole (21) is in the following ratio to the fixed link width (bs, bsa):

$$0.7 < \text{difference (R4-R3) / fixed link width (bs, bsa)} < 1.3$$

5. Fuel injection valve according to one of Claims 2 to 4, **characterised in that**

   - the partition end face (38, 38a) of the guide bore hole (21) leading to the wall of the supply channel (25) is shaped as an almost flat surface, and

   - the normal (37) of the partition end face (38, 38a) is almost parallel with the wall of the guide bore hole (21) and encompasses an angle greater than 0 degrees with the wall of the supply channel (25).

6. Fuel injection valve according to one of Claims 2 to 5, **characterised in that** the fixed link width (bs, bsa) is greater than 0.65 mm.

7. Fuel injection valve according to one of Claims 2 to 6, **characterised in that** the pressure chamber (22) is almost rotationally symmetric.

8. Fuel injection valve according to one of Claims 2 to 7, **characterised in that** the wall of the supply channel (25) with the wall of the tip (34) of the supply channel (25) forms a rounded, second intersection edge with a second intersection radius (R2) which is greater than 0.3 mm.

9. Fuel injection valve according to one of Claims 2 to 8, **characterised in that** the angle which the supply channel (25) encompasses with the longitudinal axis (20) of the nozzle (2) is in the region of between 5° and 15°.

10. Fuel injection valve, manufactured according to a method according to Claim 1, with a nozzle (2) which has a pressure chamber (22) into which a guide bore hole (21) and a supply channel (25) lead, between which a partition (26) runs, the partition end face (38, 38a) of which points to the pressure chamber (22), whereby

   - the supply channel (25) is straight at least in its section pointing to the pressure chamber (22), preferably in the form of a bore hole,

   - the angle between the wall of the supply bore hole and the flat partition end face (38a) is between 96° and 98°, preferably approximately 97°,

   - the partition end face (38a) is flat,

- the first intersection radius (R1a) is greater than 0.3 mm and

- the fixed link width (bsa) is between 7.5 and 8.5 mm, preferably 8 mm.

**11.** Fuel injection valve according to Claim 10, **characterised in that**

- the supply channel (25) is straight, e.g. in the form of a bore hole,

- the angle between the guide bore hole (21) and the supply channel (25) is approximately 7° and

- the first intersection radius (R1a) is less than 0.6 mm,

- the angle between the partition end face (38a) and the wall of the guide bore hole (21) is approximately 90°,

**12.** Method according to Claim 1, **characterised in that**

- the electrolytic electrode (1) is in the shape of a cylindrical electrode,

- there is an electrical insulating casing on the outer surface of the electrode, in particular, in the form of a coating, and

- the normal of the frontal area of the electrode encompasses an aperture angle with the electrode longitudinal axis which is greater than 0 degrees.

**Revendications**

**1.** Procédé pour la fabrication d'une soupape d'injection de carburant avec un corps de buse (2)

- qui présente une chambre de compression (22) dans laquelle débouchent un perçage de guidage (21) et un canal d'arrivée (25) entre lesquels court une cloison (26), tel que
- lors de la réalisation de la chambre de compression (22) et du canal d'arrivée (25) dans le corps de buse (2), apparaît entre la chambre de compression (22) et le canal d'arrivée (25) une première zone d'intersection (35) du corps de buse (2) qui est au moins partiellement éliminée par usinage électrolytique,
- une électrode d'usinage (1) étant introduite dans un canal d'arrivée (25), et
- un liquide d'usinage électrolytique étant pompé par le canal d'arrivée (25) et s'écoulant par la chambre de compression (22) et le perçage de guidage (21), et où
- l'électrode d'usinage (1) se présente sous forme d'une canule cylindrique creuse (10),
- sur la surface externe de la canule (10) est mise une enveloppe isolante électriquement (15), notamment sous forme d'un revêtement, **caractérisé en ce que**,
- la normale de la face avant (14) de la canule (10) forme avec l'axe longitudinal de la canule (18) un angle d'ouverture (a) qui est supérieur à 0°.

**2.** Soupape d'injection de carburant fabriquée d'après un procédé selon la revendication 1, avec un corps de buse (2) qui présente une chambre de compression (22) dans laquelle débouchent un perçage de guidage (21) et un canal d'arrivée (25) entre lesquels court une cloison (26) dont la surface de cloison (38, 38a) est orientée vers la chambre de compression (22),

- le canal d'arrivée (25) coupant la chambre de compression (22) de telle sorte que la distance de la chambre (dk), qui correspond à la distance minimale entre l'axe (39) du canal d'arrivée (25) et la paroi de la chambre de compression (22), est supérieure à 0 mm, et
- la paroi du canal d'arrivée (25) formant avec la surface de cloison (38, 38a) un premier bord d'intersection arrondi avec un premier rayon d'intersection (R1), **caractérisée en ce que**,

le premier rayon d'intersection (R1) est situé entre 0,3 mm et 0,6 mm, et que,
le rapport entre la distance de la chambre (dk) et le rayon (R5) du canal d'arrivée (25) est entre 0,5 et 1, 0,5 < distance de la chambre (dk)/rayon du canal d'arrivée (R5) < 1.

3. Soupape d'injection de carburant selon la revendication 2, **caractérisée en ce que**

   - la surface de cloison (38, 38a) entre la paroi du perçage de guidage (21) et la paroi du canal d'arrivée (25) forme une arête (33, 33a) dotée d'une largeur d'arête (bs, bsa),
   - la ligne de plus faible longueur qui suit l'arête (33, 33a) de la paroi du perçage de guidage (21) à la paroi du canal d'arrivée (25) forme avec le bord qui est formé par la paroi du canal d'arrivée (25) et la surface de doison (38, 38a) et le bord qui est formé par la paroi du perçage de guidage (21) et la surface de cloison (38, 38a) deux points d'intersection, et
   - une droite passant par les deux points d'intersection forme avec l'axe longitudinal (20) du corps d'injecteur (2) un angle (c) qui est supérieur à 70 degrés, la distance des deux points d'intersection étant définie comme la largeur d'arête (bs, bsa).

4. Soupape d'injection de carburant selon la revendication 2 ou 3, **caractérisée en ce que**
   la différence (R4-R3) entre le rayon maximum (R4) de la chambre de compression (22) et le rayon (R3) du perçage de guidage se trouve dans le rapport suivant avec la largeur d'arête (bs, bsa) :

   0,7 < différence (R4-R3) / largeur d'arête (bs, bsa) < 1,3

5. Soupape d'injection de carburant selon l'une des revendications 2 à 4, **caractérisée en ce que**

   - la surface de cloison (38, 38a) allant du perçage de guidage (21) à la paroi du canal d'arrivée (25) forme une surface approximativement plane, et
   - la normale (37) de la surface de cloison (38, 38a) est approximativement parallèle à la paroi du perçage de guidage (21) et forme avec la paroi du canal d'arrivée (25) un angle qui est supérieur à 0°.

6. Soupape d'injection de carburant selon l'une des revendications 2 à 5, **caractérisée en ce que**
   la largeur d'arête (bs, bsa) est supérieure à 0,65 mm.

7. Soupape d'injection de carburant selon l'une des revendications 2 à 6, **caractérisée en ce que**
   la chambre de compression (22) est approximativement à symétrie de révolution.

8. Soupape d'injection de carburant selon une des revendications 2 à 7, **caractérisée en ce que**
   la paroi du canal d'arrivée (25) forme avec la paroi de la pointe (34) du canal d'arrivée (25) un second bord d'intersection arrondi, avec un second rayon d'intersection (R2) qui est supérieur à 0,3 mm.

9. Soupape d'injection de carburant selon l'une des revendications 2 à 8, **caractérisée en ce que**
   l'angle que forme le canal d'arrivée (25) avec l'axe longitudinal (20) du corps d'injecteur (2) est compris entre 5° et 15°.

10. Soupape d'injection de carburant fabriquée d'après un procédé selon la revendication 1, avec un corps de buse (2) qui présente une chambre de compression (22) dans laquelle débouchent un perçage de guidage (21) et un canal d'arrivée (25) entre lesquels court une cloison (26) dont la surface de cloison (38, 38a) est orientée vers la chambre de compression (22),

    - la canal d'arrivée (25) étant rectiligne, de préférence sous forme d'un alésage, au moins dans sa partie menant à la chambre de compression (22),
    - l'angle entre la paroi du perçage de guidage et la surface de cloison plane (38a) étant situé entre 96° et 98°, et étant de préférence de 97° environ,
    - la surface de cloison (38a) étant plane,
    - le premier rayon d'intersection (R1a) étant supérieur à 0,3 mm, et
    - la largeur d'arête (bsa) étant située entre 7,5 mm et 8,5 mm, et étant de préférence autour de 8 mm.

11. Soupape d'injection de carburant selon la revendication 10, **caractérisée en ce que**

    - le canal d'arrivée (25) est rectiligne, par exemple sous forme d'un alésage,
    - l'angle entre le perçage de guidage (21) et le canal d'arrivée (25) est d'environ 7°,
    - le premier rayon d'intersection (R1) est inférieur à 0,6 mm, et

- l'angle entre la surface de cloison (38a) et la paroi du perçage de guidage (21) est d'environ 90°.

12. Procédé selon la revendication 1, **caractérisé en ce que**

- l'électrode d'usinage électrolytique (1) est constituée par une électrode cylindrique,
- sur la surface externe de l'électrode est posée une enveloppe isolante électriquement, notamment sous forme d'un revêtement, et
- la normale de la face avant de l'électrode forme avec l'axe longitudinal de l'électrode un angle d'ouverture qui est supérieur à 0°.

FIG 1

# FIG 1 A

FIG 2